# EUROPEAN PATENT APPLICATION

(11) **EP 4 091 436 A1**
(43) Date of publication of application: **23.11.2022**
(21) Application number: 20808002.8
(22) Date of filing: 08.07.2020
(51) Int. Cl.: A01G 7/00, G04F 13/00

(54) **FLOWER QUALITY MANAGEMENT INDICATOR AND FLOWER QUALITY MANAGEMENT METHOD**

(30) Priority: 05.11.2019 JP 2019200597
(71) Applicant: Impack Corporation, Higashiyamato-shi, Tokyo 207-0014 (JP); National University Corporation Hokkaido University, Sapporo-shi, Hokkaido 060-0808 (JP)
(72) Inventor: MORISHIGE, Hekiro, Higashiyamato-shi, Tokyo 207-0014 (JP); KOSEKI, Shigenobu, Sapporo-shi, Hokkaido 060-0808 (JP)
(74) Representative: Locas, Davide
(86) International application number: PCT/JP2020/026728
(87) International publication number: WO 2021/090534

(57) **Abstract**

An indicator capable of determining accumulated temperatures of of about 500 °C·h and about 1000 °C·h that are the important indexes in the quality management for the cut flowers is provided. This indicator includes: a first packet P1 containing first component solution L1; and a second packet P2 containing second component solution L2, and the first component solution and the second component solution are brought into contact with each other by pressing either packet, and first color change from transparent color to pale blue color and second color change from blue color to brown color are generated by Maillard reaction. The first component solution includes sugar and solvent, and the second component solution includes amino acid, pH adjuster and solvent. For example, it is determined that the accumulated temperature is within 500 °C·h when the indicator shows transparent color, and it is determined that the accumulated temperature is within 1000 °C·h when the indicator shows blue color. In the manner, the accumulated temperatures can be readily checked by one look, so that the remaining "vase life" of the cut flowers can be determined.

## Description

### TECHNICAL FIELD

The present invention relates to a quality management indicator for flowers and ornamental plants, and a quality management method for the flowers and ornamental plants.

### BACKGROUND ART

Flowers are variously attractive, and are distributed in various ways in order to enrich the living environment. Particularly, cut flowers are readily-enjoyable products, and therefore, are widely distributed. For example, flowers that are grown by farmers (growers) who sell the flowers and ornamental plants are harvested (picked), and become the cut flowers. A bunch of about ten to twenty harvested cut flowers is made, and a plurality of the bunches of the flowers are laid down and packaged in a cardboard box, and are delivered. For example, the delivered cut flowers are collected in markets, and are delivered to consumers through bouquet manufacturers or retailers (supermarkets or others).

In such cut flowers, a "vase life (freshness)" is cited as a significant index for determining a commercial value of these cut flowers. "A length of the vase life" of the cut flowers is of important concern to the markets, the bouquet manufacturers, the retailers (supermarkets or others) and the consumers.

For example, the vase life is evaluated by checking practical change of the cut flowers on the basis of an evaluation sheet based on a "reference test manual for the cut-flower vase-life evaluation". However, the evaluation criteria are complicated, and it is difficult to always reflect influence of a temperature change or others in the distribution onto the cut flowers.

Under such circumstances, it is desirable to design an indicator that is more readily checkable by one look for use in determining the "vase life" index of the cut flowers, and to design a quality management method using the indicator.

For example, a Patent Document 1 discloses an indicator for use in determining a temperature history affecting a quality that is changed by a storage environmental temperature of perishable foods such as vegetables, meats and fishes, and foods and beverages such as raw materials, intermediate products and final products of processed foods such as lunch boxes and delicatessen foods, and besides, pharmaceuticals such as vaccines, biochemical samples, cosmetics, and others (foods and beverages), or changed by storage elapsed time of the same under each environment.

### RELATED ART DOCUMENT

### PATENT DOCUMENT

Patent Document 1: International Patent Publication No. WO/2013/054952

### SUMMARY OF THE INVENTION

### PROBLEMS TO BE SOLVED BY THE INVENTION

The present inventors have engaged in research and development of the quality improvement of the cut flowers, and have striven to study the indicator that is more readily checkable by one look for use in determining the "vase life" index of the cut flowers as described above, and to study a quality management method using the indicator.

In the studies, the present inventors have designed the "vase life" index of the cut flowers, have found out an indicator that is consistent with this index, and have found out the quality management method for the cut flowers.

### MEANS FOR SOLVING THE PROBLEMS

[1] A quality management indicator for flowers and ornamental plants of the present invention includes: a first packet configured to contain first component solution; and a second packet coupled to the first packet through a joint portion and configured to contain second component solution, the first component solution and the second component solution are brought into contact with each other through the joint portion by pressing the first packet or the second packet, and first color change from a transparent color to a pale blue color and second color change from a blue color to a brown color are generated by Maillard reaction between the first component solution and the second component solution.
[2] In the quality management indicator for flowers and ornamental plants, the first color change corresponds to 500 °C·h, and the second color change corresponds to 1000 °C·h.
[3] In the quality management indicator for flowers and ornamental plants, the first component solution includes sugar and solvent, and the second component solution includes amino acid, pH adjuster and solvent.
[4] In the quality management indicator for flowers and ornamental plants, the sugar is any one or more selected from the group consisting of xylose, glucose, fructose, galactose, arabinose, maltose, mannitol, sucrose and lactose.
[5] In the quality management indicator for flowers and ornamental plants, the amino acid is any one or more selected from the group consisting of glycine, alanine, glutamic acid, lysine and salts of these substances.
[6] In the quality management indicator for flowers and ornamental plants, the pH adjuster is any one or more selected from the group consisting of sodium hydrogen carbonate, potassium carbonate, potassium dihydrogen phosphate, dipotassium hydrogen phosphate, sodium dihydrogen phosphate, disodium hydrogen phosphate and tripotassium phosphate.
[7] In the quality management indicator for flowers and ornamental plants, a concentration of the sugar is equal to or higher than 2.0 M and equal to or lower than 3. 5 M, a concentration of the amino acid is equal to or higher than 2.0 M and equal to or lower than 2.5 M, and a concentration of the pH adjuster is equal to or higher than 0.2 M and equal to or lower than 0.6 M.
[8] In the quality management indicator for flowers and ornamental plants, the sugar is xylose, the amino acid is glycine, and the pH adjuster is disodium hydrogen phosphate.
[9] In the quality management indicator for flowers and ornamental plants, a concentration of the sugar is 3.5 M ± 0.25 M, a concentration of the amino acid is 2.0 M ± 0.25 M, and a concentration of the pH adjuster is 0.4 M ± 0.1 M.
[10] In the quality management indicator for flowers and ornamental plants, a concentration of the sugar is 4.0 M ± 0.25 M, a concentration of the amino acid is 2.0 M ± 0.25 M, and a concentration of the pH adjuster is 0.5 M ± 0.1 M.
[11] The quality management indicator for flowers and ornamental plants, further includes: a transparent window for use in checking the color change generated by the Maillard reaction; and a color hue table next to the transparent window.
[12] In the quality management indicator for flowers and ornamental plants, the color hue table includes a transparent section, a pale blue section, a blue section and a brown section.
[13] A quality management method for flowers and ornamental plants of the present invention is a quality management method for flowers and ornamental plants on the basis of color change of an indicator attached to the flowers and ornamental plants, the quality management indicator for flowers and ornamental plants is used as the indicator, and it is determined that an accumulated temperature is within 500 °C·h when the indicator shows the transparent color.
[14] In the quality management method for flowers and ornamental plants on the basis of the color change of the indicator attached to the flowers and ornamental plants, the quality management indicator for flowers and ornamental plants is used as the indicator, and it is determined that the accumulated temperature is within 1000 °C·h when the indicator shows the blue color.
[15] In the quality management method for flowers and ornamental plants on the basis of the color change of the indicator attached to the flowers and ornamental plants, the quality management indicator for flowers and ornamental plants is used as the indicator, and it is determined that the accumulated temperature is less than 1000 °C·h when the indicator does not show the brown color while the accumulated temperature is equal to or more than 1000 °C·h when the indicator show the brown color.
[16] A quality management indicator for flowers and ornamental plants of the present invention includes: a first packet configured to contain first component solution; and a second packet coupled to the first packet through a joint portion and configured to contain second component solution, the first component solution and the second component solution are brought into contact with each other through the joint portion by pressing the first packet or the second packet, color change from a transparent color to a brown color is generated by Maillard reaction between the first component solution and the second component solution, and the color change to the brown color corresponds to 500 °C·h.
[17] In the quality management indicator for flowers and ornamental plants, a concentration of the sugar is 4.0 M ± 0.25 M, a concentration of the amino acid is 2.5 M ± 0.25 M, and a concentration of the pH adjuster is 0.5 M ± 0.1 M.
[18] The present invention relates to the quality management method for flowers and ornamental plants on the basis of the color change of the indicator attached to the flowers and ornamental plants, the quality management indicator for flowers and ornamental plants is used as the indicator, and it is determined that the accumulated temperature is less than 500 °C·h when the indicator does not show the brown color while the accumulated temperature is equal to or more than 500 °C·h when the indicator shows the brown color.

### EFFECTS OF THE INVENTION

According to the quality management indicator for flowers and ornamental plants of the present invention, the accumulated temperatures of about 500 °C·h and about 1000 °C·h that are the important indexes in the quality management for the cut flowers can be determined. Particularly, such accumulated-temperature determination can be readily verified by one look.

According to the quality management method for flowers and ornamental plants of the present invention, the accumulated temperatures of about 500 °C·h and about 1000 °C·h that are the important indexes in the quality management for the cut flowers can be readily determined, so that the quality such as the "vase life" of the cut flowers can be managed.

### BRIEF DESCRIPTIONS OF THE DRAWINGS

FIG. 1 is a diagram showing a calculation example of a necessary accumulated temperature in a distribution step of cut flowers;
FIG. 2 is a diagram showing a color change state of an accumulated-temperature indicator;
FIG. 3 is a diagram showing color change of an activated indicator (in a condition 5);
FIG. 4 is a diagram showing temperature change and color change of an indicator of a second working example;
FIG. 5 is a diagram showing temperature change and color change of an indicator of a third working example;
FIG. 6 is a diagram showing temperature change and color change of an indicator of the third working example;
FIG. 7 is a diagram showing temperature change and an R value, G value and B value of an indicator of a fourth working example;
FIG. 8 is a diagram showing temperature change and an R value, G value and B value of an indicator of the fourth working example;
FIG. 9 is a diagram (schematic diagram) showing an indicator for flowers and ornamental plants;
FIG. 10 is a diagram (schematic diagram) showing one example of a method of manufacturing the indicator for flowers and ornamental plants;
FIG. 11 is a diagram (schematic diagram) showing a configuration of a first application example of the indicator for flowers and ornamental plants;
FIG. 12 is a diagram (schematic diagram) showing a configuration of a second application example of the indicator for flowers and ornamental plants;
FIG. 13 is a diagram showing a state in which the indicator for flowers and ornamental plants is attached to a carboard box in a delivery step;
FIG. 14 is a diagram showing a state in which the indicator for flowers and ornamental plants is inserted into a bouquet;
FIG. 15 is a diagram (schematic diagram) showing an indicator for flowers and ornamental plants for use in 500 °C·h;
FIG. 16 is a diagram showing a state of activation of the indicator;
FIG. 17 is a diagram showing a color change example of the indicator;
FIG. 18 is a diagram (schematic diagram) showing an indicator for flowers and ornamental plants for use in 1000 °C·h; and
FIG. 19 is a diagram showing a color change example of the indicator.

### BEST MODE FOR CARRYING OUT THE INVENTION

Hereinafter, embodiments of the present invention will be explained in detail on the basis of drawings.

### (First Embodiment)

### <Accumulated Temperature in Distribution of Cut Flowers>

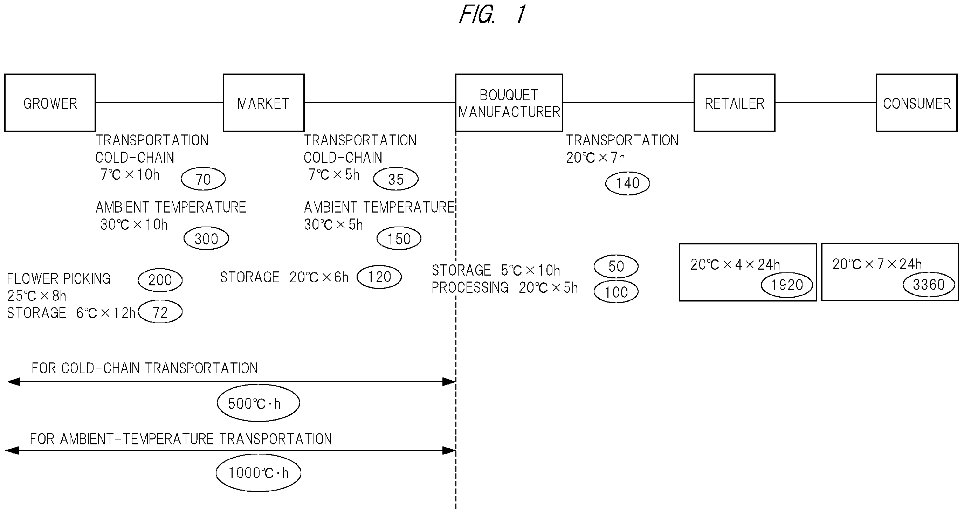

FIG. 1 shows a calculation example of a necessary accumulated temperature (Temperature [°C] × Time [h], also referred to as "Time Temperature Value") in a distribution step of the cut flowers.

As shown in FIG. 1, For the grower (farmer), 272 °C·h that is calculated from 25°C × 8 h in the flower picking and 6°C × 12 h in the storage of the flowers is the necessary accumulated temperature.

For transportation from the grower (farmer) to the market, 70 °C·h that is calculated from 7°C × 10 h in a case of cold-chain transportation or 300 °C·h that is calculated from 30°C × 10 h in a case of ambient-temperature transportation is the necessary accumulated temperature.

For the market, 120 °C·h that is calculated from 20°C × 6 h in the storage is the necessary accumulated temperature.

For transportation from the market to the bouquet manufacturer, 35 °C·h that is calculated from 7°C × 5 h in a case of cold-chain transportation or 150 °C·h that is calculated from 30°C × 5 h in a case of ambient-temperature transportation is the necessary accumulated temperature.

For the bouquet manufacturer, 50 °C -h that is calculated from 5°C × 10 h in the storage and 100 °C·h that is calculated from 20°C × 5 h in the processing are the necessary accumulated temperature.

For transportation from the bouquet manufacturer to the retailer (such as the supermarket), 140 °C -h that is calculated from 20°C × 7 h is the necessary accumulated temperature.

For example, according to such calculation example, in a course from the grower (farmer) to the bouquet manufacturer, about 500 °C·h is the necessary accumulated temperature in the case of the cold-chain transportation, and about 1000 °C·h is the necessary accumulated temperature in the case of the ambient-temperature transportation.

When vitality of the cut flowers is assumed to be 14 days at 20°C (20°C × 14 × 24 h = 672 °C·h), even if 500 °C·h (about 1 day at 20°C) is subtracted from it, quality of 13 days at 20°C is secured, and, the vase life of, for example, 4 days at the retailer site and 7 days at the consumer site can be secured. Even if 1000 °C·h (about 2 days at 20°C) is subtracted from it, the vase life of, for example, 3 days at the retailer site and 7 days at the consumer site can be secured.

As described above, the accumulated temperatures of about 500 °C·h and about 1000 °C·h become the important indexes in the quality management of the cut flowers. In the following manner, it is desirable to develop an accumulated-temperature indicator (TTI: time temperature indicator) capable of determining the accumulated temperatures of about 500 °C·h and about 1000 °C·h.

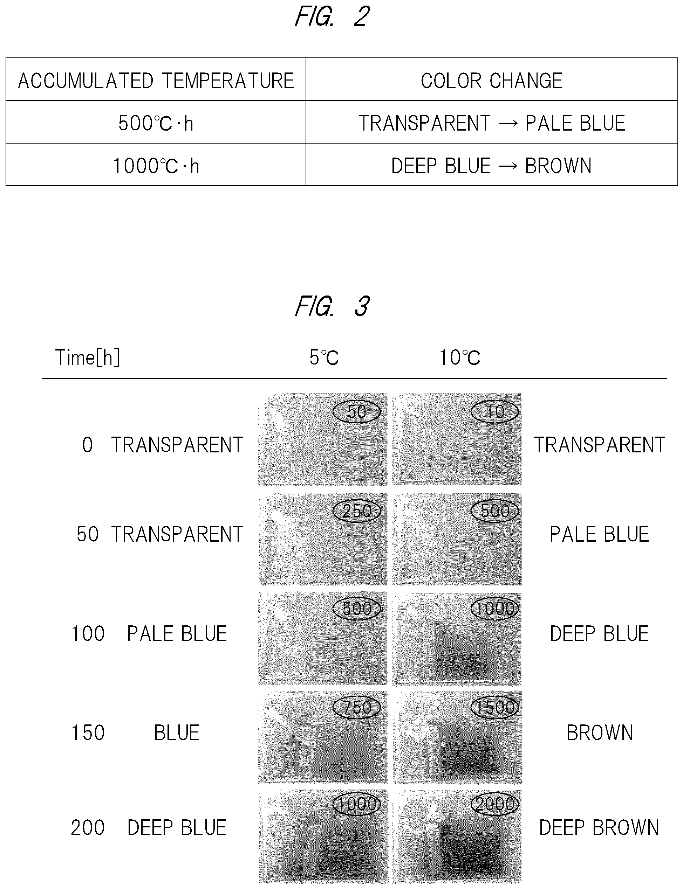

For example, as shown in FIG. 2, it is useful to obtain an accumulated-temperature indicator generating first color change (for example, a transparent color → a pale blue color) at around 500 °C·h and second color change (for example, a deep blue color → a brown color) at around 1000 °C·h. FIG. 2 is a diagram showing a color change state of the accumulated-temperature indicator.

### <Study on Accumulated-Temperature Indicator>

The accumulated-temperature indicator of the present embodiment includes sugar, amino acid, pH adjuster and solvent, and determines the accumulated temperature on the basis of the color change generated by start and progress of the Maillard reaction. The accumulated-temperature indicator is the one, a component composition of which is conditioned so that the first color change (for example, the transparent color → the pale blue color) is generated at the accumulated temperature of around 500 °C·h and so that the second color change (for example, the blue color → the brown color) is generated at the accumulated temperature of around 1000 °C·h.

The Maillard reaction is a reaction that produces a brownish material (melanoidin) based on a reaction between a sugar and an amino chemical compound, and progresses in a short time at the time of heating but progresses in a long time even at an ambient temperature. The accumulated-temperature indicator of the present embodiment is the one utilizing the Maillard reaction that slowly progresses in a long time.

Hereinafter, specific working examples of the accumulated-temperature indicator of the present embodiment will be explained.

### <Working Example>

### (First Working Example)

Xylose aqueous solution and glycine aqueous solution were conditioned.

A plurality of xylose aqueous solutions each formed by mixture of the xylose and water so as to condition a xylose concentration of 2.0 M to 3.5 M were prepared.

A plurality of glycine aqueous solutions each formed by mixture of the glycine, Na₂HPO₄ and water so as to condition a glycine concentration of 2.0 M to 2.5M and condition a Na₂HPO₄ concentration of 0.2 to 0.4 M were prepared.

**[Table 1]**

| **Condition** | **Xylose [M]** | **Glycine [M]** | **Na₂HPO₄ [M]** |
|---|---|---|---|
| **1** | **2.0** | **2.5** | **0.4** |
| **2** | **2.5** | **2.0** | **0.3** |
| **3** | **3.0** | **2.5** | **0.2** |
| **4** | **3.5** | **2.0** | **0.3** |
| **5** | **3.5** | **2.0** | **0.4** |
| **6** | **3.5** | **2.5** | **0.3** |

Two transparent pouches each made of polyethylene terephthalate were prepared. One transparent pouch "A" has a size of "45 × 30 × 1 mm", and the other transparent pouch "B" has a size of "30 × 20 × 1 mm". The xylose aqueous solution of 500 µL was injected into the transparent pouch B, and was thermally sealed. The glycine aqueous solution of 1000 µL was injected into the transparent pouch A, and was thermally sealed after the transparent pouch B was introduced therein, so that the indicator was manufactured. The Maillard reaction was started (the indicator was activated) by pressing the sealing portion of the inner transparent pouch B using a finger to break the pouch and mix the xylose aqueous solution and the glycine aqueous solution.

The activated indicator was kept for 200 hours in an incubator, a temperature of which was set to 5°C or 10°C, and the color change of each indicator was checked for every 50 hours.

In all combinations (conditions 1 to 5) of the xylose, the glycine and the Na₂HPO₄ shown in the table 1, the following color change was checked.

In the incubating at 5°C, the color change started in around 100 hours, and the deep blue color (navy color) was observed in 200 hours. This case means that the color change started when the accumulated temperature is around 500 °C·h, and the deep blue color was observed when the accumulated temperature is around 1000 °C·h.

In the incubating at 10°C, the color change started in around 50 hours, and the deep blue color was observed in 100 hours. This case means that the color change started when the accumulated temperature is around 500 °C·h, and the deep blue color was observed when the accumulated temperature is around 1000 °C·h.

Particularly, the color change in the condition 5 was remarkable, and its state is shown in FIG. 3. FIG. 3 is a diagram (photograph) showing the color change of the activated indicator (in the condition 5).

As shown in FIG. 3, in the indicator in the condition 5, in the incubating at 5°C, the color change started in around 100 hours to generate the pale blue color, and the deep blue color was observed in 200 hours. In this case, the color changed from the transparent color to the pale blue color when the accumulated temperature is around 500 °C·h, and the deep blue color was observed when the accumulated temperature is 1000 °C·h.

In the incubating at 10°C, the color change started in around 50 hours to generate the pale blue color, and the deep blue color was observed in 100 hours. In this case, the color changed from the transparent color to the pale blue color when the accumulated temperature is around 500 °C·h, and the deep blue color was observed when the accumulated temperature is 1000 °C·h.

Further, in the incubating at 10°C, the color change from the deep blue color to the brown color was observed in 100 hours and more, and therefore, the brown color was observed when the accumulated temperature exceeds 1000 °C·h so that the further color change is observed.

Therefore, it has been found that the accumulated temperature is within 500 °C·h when the color of the indicator of the present working example is the nearly transparent color (including the pale blue color or paler). It has been found that the accumulated temperature is within 1000 °C·h when the color of the indicator of the present working example is the nearly blue color (including the deep blue color but not the brown color).

### (Second Working Example)

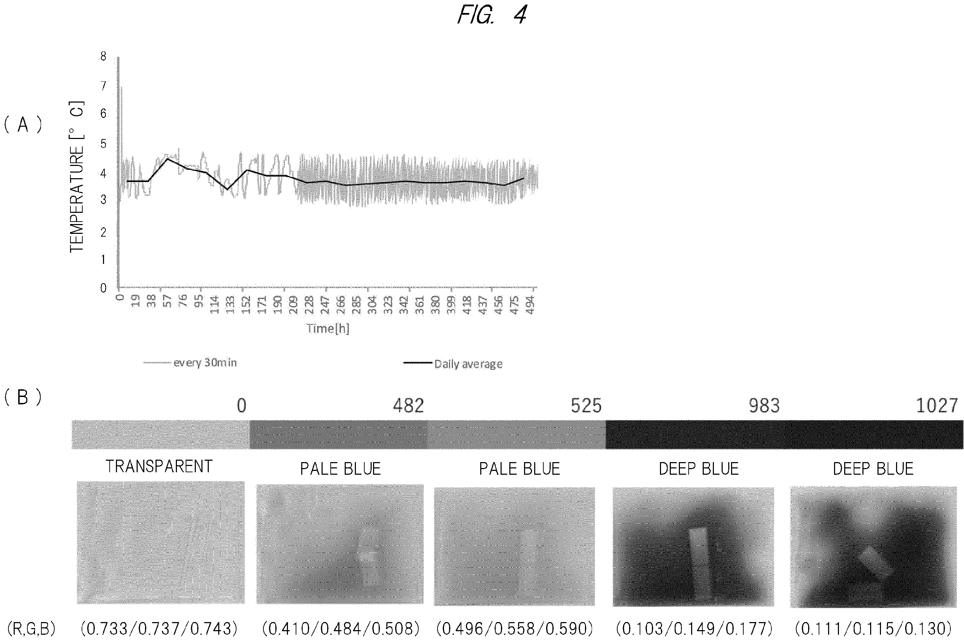

In the first working example, the incubating was performed at 5°C or 10°C. In the present working example, the incubating was performed at 3°C while using the indicator in the condition 5. FIG. 4 is a diagram showing temperature change and color change of an indicator of a second working example. FIG. 4(A) shows the temperature change inside the incubator, and FIG. 4(B) shows the color change (photographs) of the indicator (in the condition 5). Note that a color bar above the photographs is based on an RGB value "RGB_value" generated by digital image analysis for the photographs, and "an R value, a G value and a B value" are shown below each photograph. Each numerical value above the color bar is the accumulated temperature. The temperature change inside the incubator (chamber) was recorded by a data logger (Thermo Recorder TR-7wf, GRAPHTEC midiLOGGER GL240).

As shown in FIG. 4(B), in the indicator in the condition 5, in the incubating at 3°C, the color changed from the transparent color to the pale blue color when the accumulated temperature is around 500 °C·h, and the deep blue color was observed when the accumulated temperature is 1000 °C·h. As seen from this, also in the incubating at 3°C, the same color change as that of the first working example (at 5°C and 10°C) was observed.

### (Third Working Example)

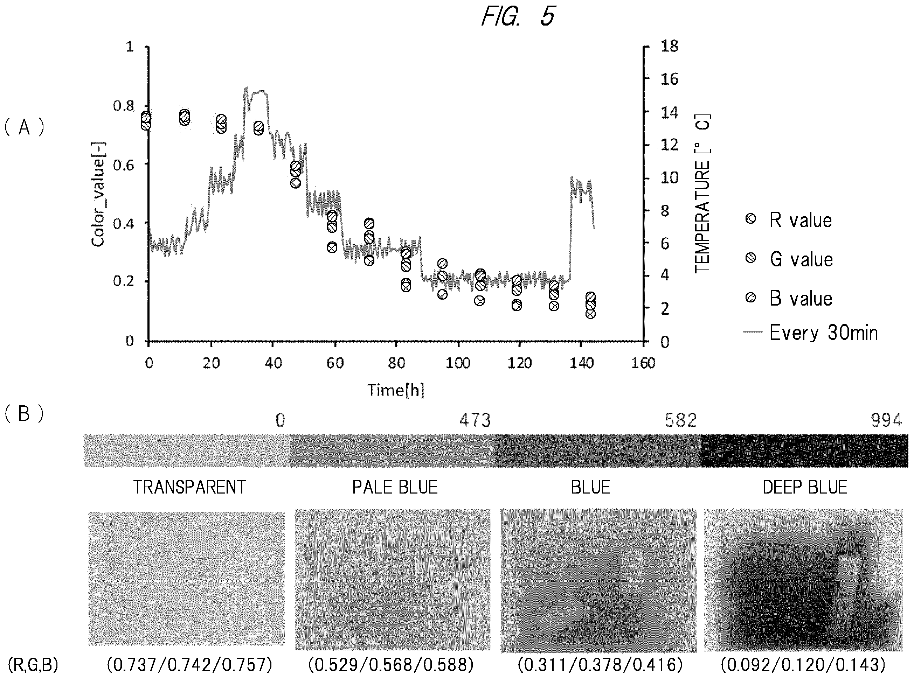

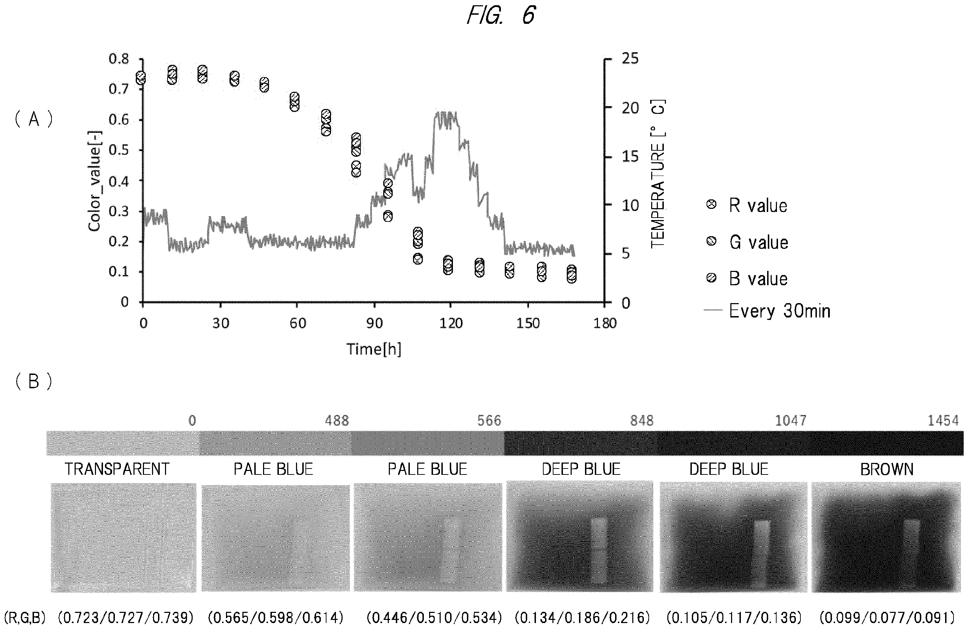

In the present working example, cases of the temperature change inside the incubator (chamber) in a range of 3°C to 16°C were studied. Each of FIGs. 5 and 6 is a diagram showing temperature change and color change of an indicator of a third working example. FIG. 5 shows a case of temperature rise up to about 16°C at an initial stage (within 80 h) after the activation, and FIG. 6 shows a case of temperature rise up to about 16°C at a later stage (after 80 h) after the activation. In each diagram, (A) indicates the temperature change inside the incubator and the RGB value, and (B) indicates the color change (photograph) of the indicator (in the condition 5). Note that a color bar above the photographs is based on the RGB value "RGB_value" generated by digital image analysis for the photographs, and "an R value, a G value and a B value" are shown below each photograph. Each numerical value above the color bar is the accumulated temperature. The temperature change inside the incubator (chamber) was recorded by a data logger (Thermo Recorder TR-7wf, GRAPHTEC midiLOGGER GL240).

As shown in FIG. 5(B), in the indicator in the condition 5, in the incubating in the temperature change shown in FIG. 5(A), the color changed from the transparent color to the pale blue color when the accumulated temperature is around 500 °C·h, and the deep blue color was observed when the accumulated temperature is 1000 °C·h. As shown in FIG. 6(B), in the indicator in the condition 5, in the incubating in the temperature change shown in FIG. 6(A), the color changed from the transparent color to the pale blue color when the accumulated temperature is around 500 °C·h, and the deep blue color was observed when the accumulated temperature is 1000 °C·h. And, the brown color was observed when the accumulated temperature is 1454 °C·h.

As seen from this, also in the cases of the temperature change inside the incubator (chamber) in the range of 3°C to 16°C, the same color change as that of the first working example (at 5°C and 10°C) was observed.

In all of the R value, the G value and the B value in FIGs. 5(A) and 6(A), rapid change of each value (colo_value) was observed when the accumulated temperature is around 500 °C·h (at around 50 h in FIG. 5 (A) and at around 90 h in FIG. 6 (A)). Note that a region of "1" of the color_value is a white color region, and a region of "0" of the same is a black color region. The photograph was imaged while taking a white background.

Therefore, the R value, the G value and the B value are obtained by the digital image analysis for the color (photograph) of the indicator, so that the color change can be checked on the basis of a change rate of these values. For example, a photograph of the indicator is imaged by a mobile terminal such as a smartphone, and the accumulated temperature can be checked on the basis of a calibration curve stored in a dedicated application software (digital image analysis program).

Alternatively, the accumulated temperature can be also checked on the basis of the RGB value. For example, the color may be determined to be the transparent color when the RGB value (color_value of, for example, the G value and the B value) of the R value, the G value and the B value shown in FIGs. 4 to 6 described above is 1 to 0.65, to be the pale blue color when the RGB value is 0.65 to 0.45, to be the blue color when the RGB value is 0.45 to 0.25, to be the deep blue color when the RGB value is 0.25 to 0.1, and to be the brown color when the RGB value is 0.1 to 0. Therefore, when the RGB value (color_value) is 1 to 0.45, the accumulated temperature is determined to be within 500 °C·h since the color is the transparent color or the pale blue color. And, when the RGB value (color_value) is 0.45 to 0.1, the accumulated temperature is determined to be within 1000 °C·h since the color is the nearly blue color (including the deep blue color but not the brown color). Note that any of the R value, the G value and the B value may be used as the RGB value (color_value) . In this indicator, it is preferable to use the B value. Note that a border value in the range of the values may be included in either side.

### (Fourth Working Example)

In the present working example, the xylose aqueous solution and the glycine aqueous solution were conditioned in a blend ratio shown in a table 2, an indicator was manufactured as similar to the case of the first working example, and then, the color change was checked. Also in the present working example, the same color change as that of the first working example was observed.

**[Table 2]**

| **Condition** | **Xylose [M]** | **Glycine [M]** | **Na₂HPO₄ [M]** |
|---|---|---|---|
| **1** | **2.5** | **2.0** | **0.6** |
| **2** | **3.0** | **2.0** | **0.5** |
| **3** | **3.0** | **2.0** | **0.6** |
| **4** | **3.0** | **2.5** | **0.4** |
| **5** | **3.5** | **2.0** | **0.4** |
| **6** | **3.5** | **2.0** | **0.5** |
| **7** | **3.5** | **2.5** | **0.4** |

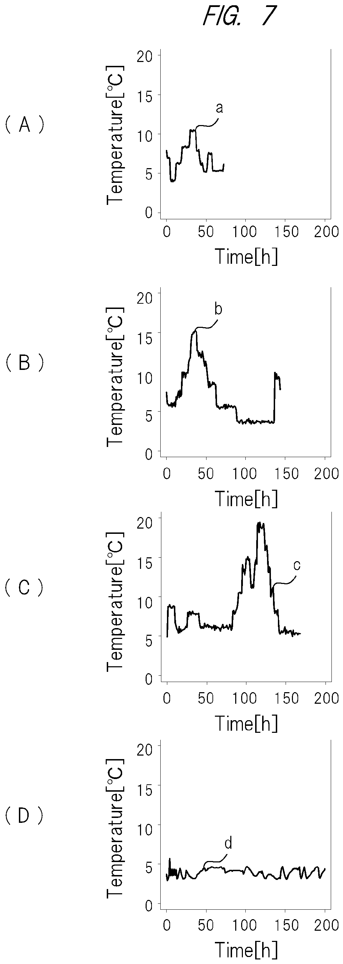

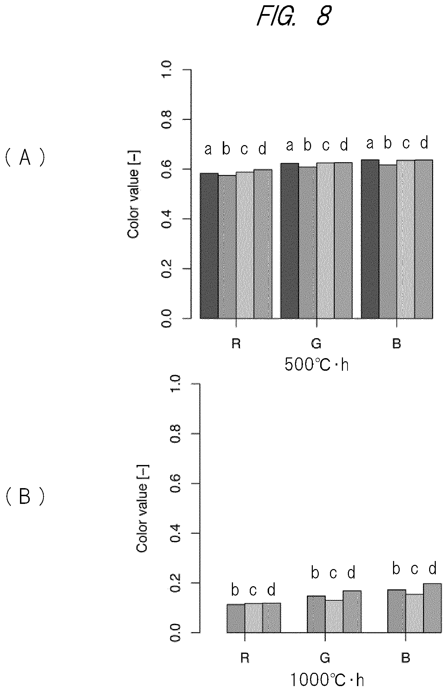

Also in the condition 5 of this case, the color change was remarkable. In the condition 5, the indicator was activated at various temperatures, and the R value, the G value and the B value were obtained by the digital image analysis for the color (photograph) of the indicator. Each of FIGs. 7 and 8 is a diagram showing the temperature changes (a to d) and the R value, the G value and the B value of the indicator in the fourth working example. The indicator was activated in the temperature changes shown in FIG. 7, and the R value, the G value and the B value were obtained by the digital image analysis for the color (photograph) of the indicator.

As shown in FIG. 8 (A), regarding the R value, the G value and the B value at the accumulated temperature of 500 °C·h, large difference was not observed among all the temperature changes (a to d) . As shown in FIG. 8(B), regarding the R value, the G value and the B value at the accumulated temperature of 1000 °C·h, large difference was not observed among them, either.

Therefore, it has been found that there is no problem of the checking of the accumulated temperature on the basis of the calibration curve or others based on the R value, the G value and the B value generated by the digital image analysis for the color (photograph) of the indicator.

### (Second Embodiment)

### <Configuration of Indicator>

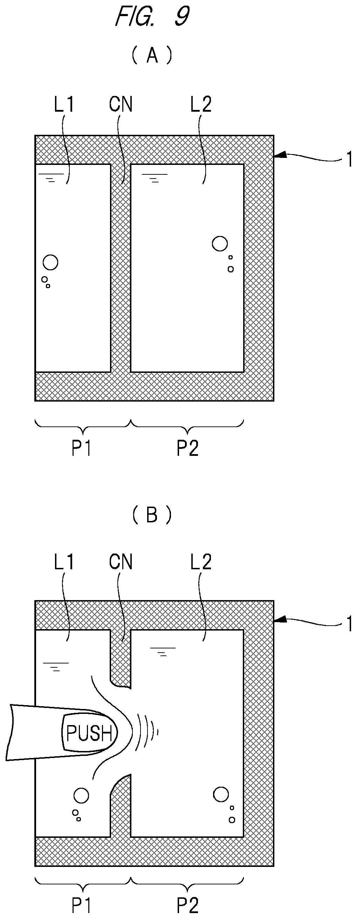

FIG. 9 is a diagram (schematic diagram) showing the indicator for the flowers and ornamental plants. The indicator for the flowers and ornamental plants according to the present embodiment includes: a first packet (first packet portion) P1 configured to contain first component solution L1; and a second packet (second packet portion) P2 configured to contain second component solution L2. These packets (packet portions) are coupled to each other, the first component solution L1 and the second component solution L2 are mixed with each other by pressing a joint portion CN by using a finger to break it as shown in FIG. 9B, and the color change is observed by the Maillard reaction after elapse of the predetermined accumulated temperature.

Inside the first packet P1, the sugar solution (the sugar and the solvent) is included (contained) as the first component solution L1. As the sugar, for example, any one or more selected from the group consisting of xylose, glucose, fructose, galactose, arabinose, maltose, mannitol, sucrose and lactose can be used. Particularly, for the indicator for the flowers and ornamental plants, it is preferable to use the xylose. A concentration of the sugar solution is preferably 2.0 M to 3.5 M. Although an inclusion amount is not limited, the amount is, for example, about 0.3 ml to 5 ml.

Inside the second packet P2, the solution of the amino acid and the pH adjuster (the amino acid, the pH adjuster and the solvent) is included (contained) as the second component solution L2. The pH adjuster is preferably contained into the amino-acid packet since the color change is generated by a different reaction from the Maillard reaction due to the contact between the sugar and the pH adjuster.

As the amino acid, for example, any one or more selected from the group consisting of glycine, alanine, arginine, asparagine, aspartic acid, cysteine, glutamine, glutamic acid, histidine, isoleucine, leucine, lysine, methionine, phenylalanine, proline, serine, threonine, tryptophan, tyrosine, valine and salts of these materials can be used. Particularly, for the indicator for the flowers and ornamental plants, it is preferable to use the glycine, the alanine or the salt of each of these materials. As the amino acid salt, for example, hydrochloride salt, ammonium salt, sodium salt, potassium salt, calcium salt or magnesium salt can be used. As the pH adjuster, any one or more selected from the group consisting of sodium hydrogen carbonate, potassium carbonate, potassium dihydrogen phosphate, dipotassium hydrogen phosphate, sodium dihydrogen phosphate, disodium hydrogen phosphate and tripotassium phosphate can be used. Particularly, for the indicator for the flowers and ornamental plants, it is preferable to use the dipotassium hydrogen phosphate or the disodium hydrogen phosphate so that the pH of the mixture made of the sugar and the amino acid is conditioned to be in a range of neutral to weakly basic. A concentration of the amino acid is preferably 2.0 M to 2.5 M. A concentration of the pH adjuster is preferably 0.2 M to 0.6 M. Although an inclusion amount is not limited, the amount can be, for example, about 0.3 ml to 5 ml. Note that the second component solution L2 more than the first component solution L1 may be included because of containing the amino acid and the pH adjuster.

As the solvent, any solvent is applicable as long as being capable of solving the sugar, the amino acid and the pH adjuster. However, it is preferable to use water.

By the mixture of the first component solution L1 and the second component solution L2, the Maillard reaction generating the color change can be caused at the accumulated temperature of around 500 °C·h or 1000 °C·h. In other words, the indicator can be obtained, the indicator presenting the color change at the accumulated temperature of around 500 °C·h or 1000 °C·h that is the significance for the quality management for the flowers and ornamental plants.

As materials of the first packet P1 and the second packet P2, any material is applicable as long as being not modified by the contained first component solution L1 and second component solution L2. For example, polyethylene terephthalate, polypropylene, polyethylene, ethylene-ethyl acrylate (EEA), ethylene-vinyl acetate copolymer (EVA), ionomer resin or others can be used. Particularly, for the indicator for the flowers and ornamental plants, it is preferable to use polyethylene terephthalate or the polyethylene. Each of these materials can be readily contained by thermal welding because of having high stability to acids. Each material has high transparency, and therefore, the color change can be readily checked.

These materials can be shaped into the packet form by the thermal welding. A sealing strength of the joint portion is made smaller than sealing strengths of other portions. The sealing strength of the joint portion can be made smaller by, for example, a lower heating temperature or a smaller heating pressure. Alternatively, the sealing strength of the joint portion can be made smaller when a width of the joint portion is smaller than those of the other portions.

### <Manufacturing Method of Indicator>

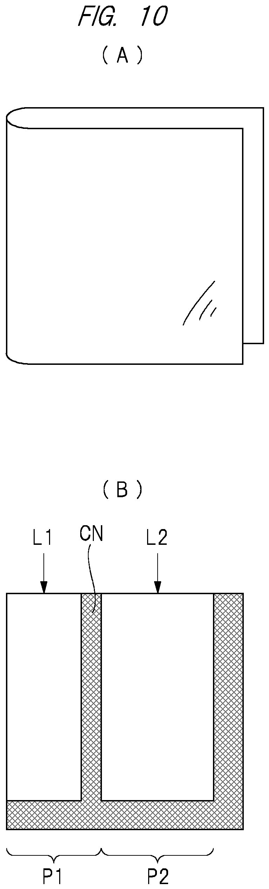

While a manufacturing method of the indicator is not limited, the indicator can be manufactured by, for example, a step shown inn FIG. 10. FIG. 10 is a diagram (schematical diagram) showing one example of a method of manufacturing the indicator for the flowers and ornamental plants.

For example, as shown in FIG. 10(A), a substantially-rectangular film material (that is a material of the first packet P1 and the second packet P2) is double-folded, and a bottom and a side (right side in the specification) are thermally welded. At this time, the joint portion CN is also thermally welded. In this manner, two packets (packet portion P1, P2) are formed (FIG 10(B)).

Then, the first component solution L1 is injected into the first packet P1, and the second component solution L2 is injected into the second packet P2, and then, an upper portion of the packet (P1, P2) is thermally welded for the sealing. In this manner, the indicator can be formed. The indicator has, for example, a vertical size of about 3 cm to 6 cm, a horizontal size of about 3 cm to 6 cm, and a thickness of about 3 mm to 10 mm.

### (First Application Example)

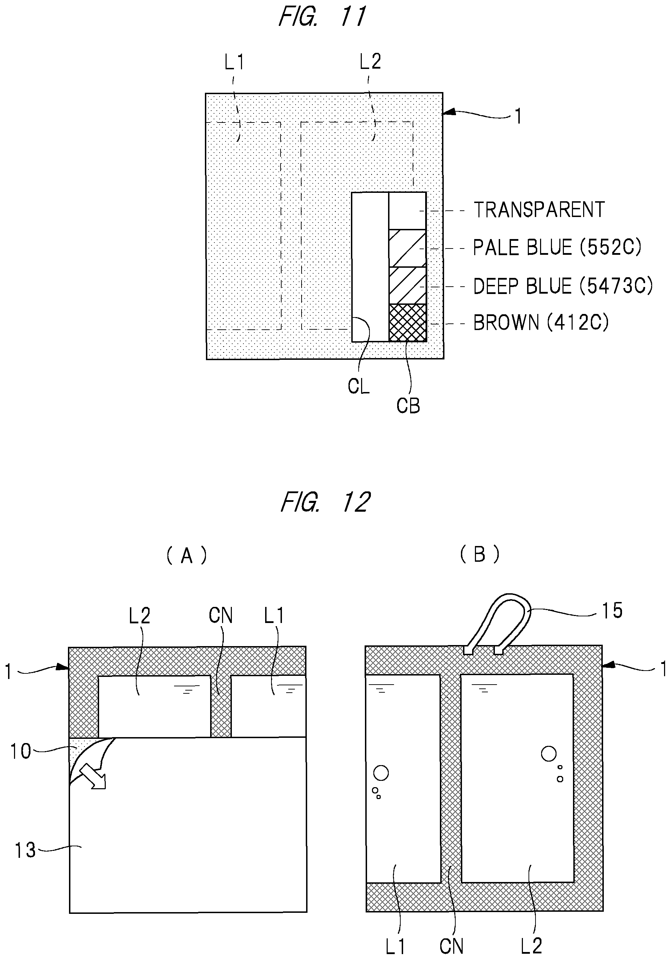

FIG. 11 is a diagram (schematical diagram) showing a configuration of a first application example of the indicator for the flowers and ornamental plants. At least one part of the first packet P1 and the second packet P2 (the indicator) may be configured to have a transparent portion (transparent window) CL, and a product name, a method of usage or others may be printed on the other part. Particularly when the color bar (color tone table, color hue table) CB or others is previously printed next to the transparent portion (transparent window) CL, indication (estimate) of the remaining vital force (quality retention period) of the flowers and ornamental plants can be obtained.

In the color bar (color tone table, color hue table) CB, for example, the transparent color, the pale blue color, the blue color, the brown color and others are previously printed. Alternatively, in the color bar (color tone table, color hue table) CB, a color based on a color sample (PANTONE) may be printed. As an example of combination of the color samples, for example, a transparent color, 552C, 5473C, 412C and others can be exemplified.

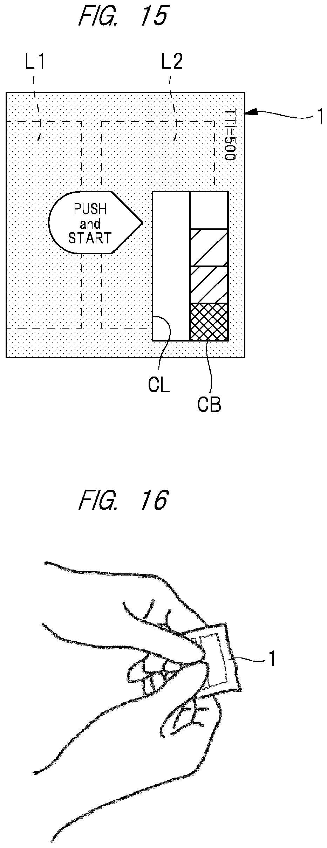

Alternatively, a mark indicating the pressure portion may be printed near the joint portion CN (see FIG. 15 and others).

### (Second Application Example)

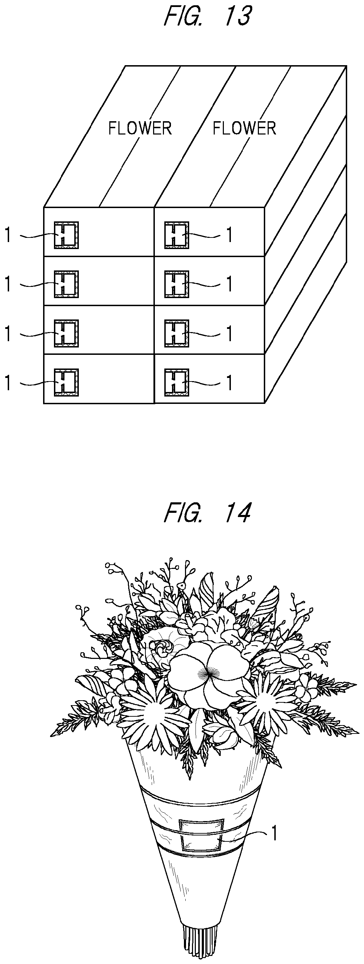

FIG. 12 is a diagram (schematical diagram) showing a second application example of the indicator for the flowers and ornamental plants. A member for use in attaching the indicator 1 to a package body such as a box for the flowers and ornamental plants may be previously prepared in the indicator. For example, as shown in FIG. 12 (A), a double-sided tape may be attached to a back surface (that is an opposite surface of the printed surface) of the indicator 1. The double-sided tape includes a bonding portion (sticking portion, adhesive) 10 and a peel liner 13, and the bonding portion 10 can be attached to the package body for the flowers and ornamental plants by peeling off the peel liner (liner portion) 13 (see FIG. 13).

Alternatively, for example, as shown in FIG. 12(B), the indicator 1 may be attached by attaching a string 15 to the indicator 1 so that, for example, culms or branches of the flowers are covered with or fastened with the string. A length of the string is appropriately adjustable.

### <Method of Usage of Indicator for Flowers and Ornamental Plants>

Next, one example of a method of usage of the indicator for the flowers and ornamental plants will be explained. FIG. 13 is a diagram showing a state in which the indicator for the flowers and ornamental plants is attached to the cardboard box for use in the delivery. When the indicator 1 is activated and is attached to an outside of the cardboard box as seen in the drawing, the quality of the flowers and ornamental plants can be managed. A place to which the indicator 1 is attached may be an inside of the cardboard box. Alternatively, the indicator 1 may be attached to each of the bunches of the housed flowers.

The indicator of the preset embodiment can be used at various stages of the distribution of the flowers and ornamental plants (see FIG. 1). FIG. 14 is a diagram showing a state in which the indicator for the flowers and ornamental plants is inserted into the bunch of flowers. As seen in the drawing, at the retailer (supermarket or others) site, the indicator 1 may be attached to the bunch of the processed flowers for the quality management for the flowers and ornamental plants. In FIG. 14, the indicator 1 for use in the flowers and ornamental plants is inserted into a pocket of a transparent wrapping film for the flowers and ornamental plants to fix the indicator 1.

### (Third Embodiment)

In the indicator (in the condition 5, FIG. 3) of the first working example of the first embodiment, it is difficult to determine the first color change (from the transparent color to the pale blue color) at around 500 °C·h by visual checking.

Therefore, in the indicator (in the condition 5, FIG. 3) of the first embodiment, an indicator having combination of the xylose concentration of 3.5 M, the glycine concentration of 2.0 M and the Na₂HPO₄ concentration of 0.4 M may be used as the indicator for use in 1000 °C·h, and an indicator having combination of the xylose concentration of 4.0 M, the glycine concentration of 2.0 M and the Na₂HPO₄ concentration of 0.5 M may be used as the indicator for use in 500 °C·h. By increase in the xylose concentration, a degree of the color change is increased so that time taken for the color change to the brown color can be shortened, and thus, the determination becomes easier. By selectively separately using two types of the indicators as described above, the quality can be more readily definitely managed.

FIG. 15 is a diagram (schematic diagram) showing the indicator for flowers and ornamental plants for use in 500 °C·h. In this indicator (TTI = 500), the color bar (color tone table, color hue table) CB is printed next to the transparent portion (transparent window) CL, and, for example, the transparent color, the pale blue color, the blue color and the brown color are printed in the color bar (color tone table, color hue table) CB. A mark indicating the pressure portion is printed near the joint portion.

Such an indicator for use in 500 °C·h is activated as shown in FIG. 16. FIG. 16 is a diagram showing a state of the activation of the indicator. As seen in the drawing, the above-described two liquids (the first component solution L1 and the second component solution L2) are mixed. Then, the change to the brown color is generated by the Maillard reaction after the elapse of the predetermined accumulated temperature (in this case, the elapse of 500 °C ·h).

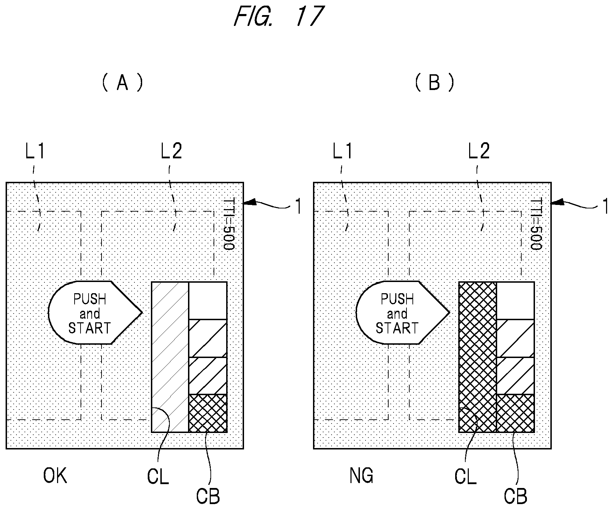

FIG. 17 is a diagram showing an example of the color change of the indicator. For example, when the color of the transparent portion (transparent window) CL is blue (not brown) as shown in FIG. 17(A), the accumulated temperature is less than 500 °C·h, and therefore, for example, it can be determined that the quality is excellent (which means "OK"). On the other hand, when the color of the transparent portion (transparent window) CL is brown as shown in FIG. 17 (B), the accumulated temperature is equal to or more than 500 °C·h, and therefore, for example, it cannot be determined that the quality is excellent (which means "NG").

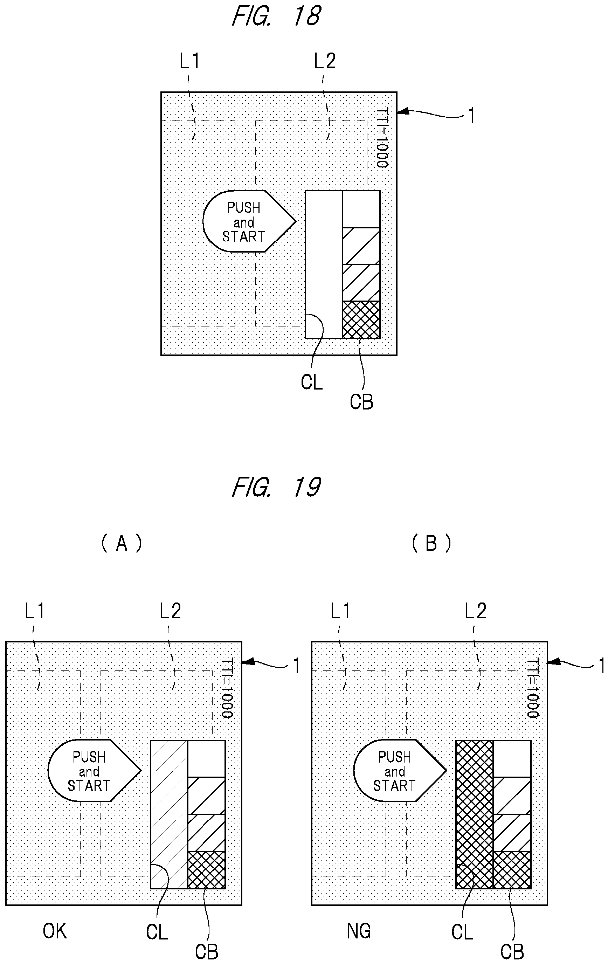

FIG. 18 is a diagram (schematic diagram) showing the indicator for flowers and ornamental plants for use in 1000 °C·h. In this indicator (TTI = 1000), the color bar (color tone table, color hue table) CB is printed next to the transparent portion (transparent window) CL, and, for example, the transparent color, the pale blue color, the blue color and the brown color are printed in the color bar (color tone table, color hue table) CB. A mark indicating the pressure portion is printed near the joint portion.

Such an indicator for use in 1000 °C·h is activated (see FIG. 16), the above-described two liquids (the first component solution L1 and the second component solution L2) are mixed. Then, the change to the brown color is generated by the Maillard reaction after the elapse of the predetermined accumulated temperature (in this case, the elapse of 1000 °C·h).

FIG. 19 is a diagram showing an example of the color change of the indicator. For example, when the color of the transparent portion (transparent window) CL is blue (not brown) as shown in FIG. 19(A), the accumulated temperature is less than 1000 °C·h, and therefore, for example, it can be determined that the quality is good (which means "OK") . On the other hand, when the color of the transparent portion (transparent window) CL is brown as shown in FIG. 19(B), the accumulated temperature is equal to or more than 1000 °C·h, and therefore, for example, it cannot be determined that the quality is good (which means "NG").

In this case, even when the xylose concentration and the glycine concentration of each of the two indicators change in a range of ±0.25 M, the favorable color tone change can be maintained. Even when the Na₂HPO₄ concentration changes in a range of ±0.1 M, the favorable color tone change can be maintained.

When the two types of the indicators are designed as described above, it can be determined that the quality of the flowers and ornamental plants is good or bad, on the basis of the color change to the brown color.

For example, when the accumulated temperature is checked on the basis of the RGB value by using an application software, the accumulated temperature can be determined to be within the criteria (500 °C·h or 1000 °C·h) if the RGB value (color_value) is equal to or larger than 0.1, while the accumulated temperature can be determined to be out of the criteria if the RGB value (color_value) is smaller than 0.1.

### (Fourth Embodiment)

In the first embodiment (FIG. 1), the significance of the accumulated temperatures of 500 °C·h and 1000 °C·h has been explained while exemplifying the domestic distribution of the flowers and ornamental plants. However, for the distribution of the flowers and ornamental plants, it is necessary to consider the international transaction. In this case, accumulated temperatures for air transportation, quarantine and others are added, and significantly affect the quality of the flowers and ornamental plants. In consideration of such circumstances, for the business transaction of the flowers and ornamental plants, it is preferable to design a domestic rule and an international rule to standardize the quality management for the flowers and ornamental plants.

According to the indicator of the present invention, the accumulated temperatures of 500 °C·h and 1000 °C·h can be readily checked by one look, and the indicator seems to effectively contribute to the standardization of the quality management for the flowers and ornamental plants.

In the foregoing, the invention made by the present inventors has been concretely described on the basis of the embodiments. However, it is needless to say that the present invention is not limited to the foregoing embodiments, and various modifications can be made within the scope of the present invention.

### EXPLANATION OF REFERENCE CHARACTERS

- 1: indicator
- 10: bonding portion
- 13: peel liner
- 15: string
- CB: color bar
- CL: transparent portion
- CN: joint portion
- L1: first component solution
- L2: second component solution
- P1: first packet
- P2: second packet

## Claims

1. A quality management indicator for flowers and ornamental plants, comprising:
a first packet configured to contain first component solution; and
a second packet coupled to the first packet through a joint portion and configured to contain second component solution,
wherein the first component solution and the second component solution are brought into contact with each other through the joint portion by pressing the first packet or the second packet, and first color change from transparent color to pale blue color and second color change from blue color to brown color are generated by Maillard reaction between the first component solution and the second component solution.

2. The quality management indicator for flowers and ornamental plants according to claim 1,
wherein the first color change corresponds to 500 °C·h, and the second color change corresponds to 1000 °C·h.

3. The quality management indicator for flowers and ornamental plants according to claim 1,
wherein the first component solution includes sugar and solvent, and
the second component solution includes amino acid, pH adjuster and solvent.

4. The quality management indicator for flowers and ornamental plants according to claim 3,
wherein the sugar is any one or more selected from the group consisting of xylose, glucose, fructose, galactose, arabinose, maltose, mannitol, sucrose and lactose.

5. The quality management indicator for flowers and ornamental plants according to claim 4,
wherein the amino acid is any one or more selected from the group consisting of glycine, alanine, glutamic acid, lysine and salts of these substances.

6. The quality management indicator for flowers and ornamental plants according to claim 5,
wherein the pH adjuster is any one or more selected from the group consisting of sodium hydrogen carbonate, potassium carbonate, potassium dihydrogen phosphate, dipotassium hydrogen phosphate, sodium dihydrogen phosphate, disodium hydrogen phosphate and tripotassium phosphate.

7. The quality management indicator for flowers and ornamental plants according to claim 6,
wherein a concentration of the sugar is equal to or higher than 2.0 M and equal to or lower than 3.5 M,
a concentration of the amino acid is equal to or higher than 2.0 M and equal to or lower than 2.5 M, and
a concentration of the pH adjuster is equal to or higher than 0.2 M and equal to or lower than 0.6 M.

8. The quality management indicator for flowers and ornamental plants according to claim 7,
wherein the sugar is xylose, the amino acid is glycine, and the pH adjuster is disodium hydrogen phosphate.

9. The quality management indicator for flowers and ornamental plants according to claim 6,
wherein a concentration of the sugar is 3.5 M ± 0.25 M,
a concentration of the amino acid is 2.0 M ± 0.25 M, and
a concentration of the pH adjuster is 0.4 M ± 0.1 M.

10. The quality management indicator for flowers and ornamental plants according to claim 6, further comprising:
a transparent window for use in checking the color change generated by the Maillard reaction; and
a color hue table next to the transparent window.

11. The quality management indicator for flowers and ornamental plants according to claim 10,
wherein the color hue table includes a transparent section, a pale blue section, a blue section and a brown section.

12. The quality management indicator for flowers and ornamental plants according to claim 10, further comprising, on an opposite surface of a surface on which the color hue table is printed,:
a bonding portion; and
a liner portion configured to cover the bonding portion.

13. A quality management method for flowers and ornamental plants on the basis of color change of an indicator attached to the flowers and ornamental plants,
wherein the quality management indicator for flowers and ornamental plants according to any one of claims 1 to 12 is used as the indicator, and
it is determined that an accumulated temperature is within 500 °C·h when the indicator shows transparent color.

14. A quality management method for flowers and ornamental plants on the basis of color change of an indicator attached to the flowers and ornamental plants,
wherein the quality management indicator for flowers and ornamental plants according to any one of claims 1 to 12 is used as the indicator, and
it is determined that the accumulated temperature is within 1000 °C·h when the indicator shows blue color.

15. A quality management method for flowers and ornamental plants on the basis of color change of an indicator attached to the flowers and ornamental plants,
wherein the quality management indicator for flowers and ornamental plants according to any one of claims 1 to 12 is used as the indicator, and
it is determined that the accumulated temperature is less than 1000 °C·h when the indicator does not show brown color, and
it is determined that the accumulated temperature is equal to or more than 1000 °C·h when the indicator shows the brown color.

16. A quality management indicator for flowers and ornamental plants, comprising:
a first packet configured to contain first component solution; and
a second packet coupled to the first packet through a joint portion and configured to contain second component solution,
wherein the first component solution and the second component solution are brought into contact with each other through the joint portion by pressing the first packet or the second packet, color change from transparent color to brown color is generated by Maillard reaction between the first component solution and the second component solution, and
the color change to the brown color corresponds to 500 °C·h.

17. The quality management indicator for flowers and ornamental plants according to claim 16,
wherein a concentration of the sugar is 4.0 M ± 0.25 M,
a concentration of the amino acid is 2.5 M ± 0.25 M, and
a concentration of the pH adjuster is 0.5 M ± 0.1 M.

18. A quality management method for flowers and ornamental plants on the basis of color change of an indicator attached to the flowers and ornamental plants,
wherein the quality management indicator for flowers and ornamental plants according to claim 16 or 17 is used as the indicator, and
it is determined that the accumulated temperature is less than 500 °C·h when the indicator does not show brown color, and
it is determined that the accumulated temperature is equal to or more than 500 °C·h when the indicator shows the brown color.
